# EUROPÄISCHE PATENTSCHRIFT

(11) **EP 3 121 460 B1**
(45) Veröffentlichungstag und Bekanntmachung des Hinweises auf die Patenterteilung: **15.09.2021**
(21) Anmeldenummer: 16173164.1
(22) Anmeldetag: 06.06.2016
(51) Int. Cl.: F16B 12/20

(54) **VORRICHTUNG ZUM VERBINDEN ZWEIER MOEBELTEILE**
DEVICE FOR CONNECTING TWO PIECES OF FURNITURE
DISPOSITIF DE LIAISON DE DEUX PARTIES DE MEUBLE

(30) Priorität: 23.07.2015 DE 202015103874 U
(43) Veröffentlichungstag der Anmeldung: 25.01.2017
(73) Patentinhaber: Grass GmbH, 6973 Höchst (AT)
(72) Erfinder: Grabher, Günter, 6972 Fußach (AT); Kovacic, Zeljko, 6900 Bregenz (AT)
(74) Vertreter: Otten, Roth, Dobler & Partner mbB Patentanwälte

(56) Entgegenhaltungen:
- WO-A2-2006/047402
- DE-A1- 2 748 272
- DE-U1- 20 302 694
- DE-U1-202004 000 473
- None

## Beschreibung

Die Erfindung betrifft eine Vorrichtung zum Verbinden zweier Möbelteile nach dem Oberbegriff des Anspruchs 1, ein Verbindungselement für eine Vorrichtung zum Verbinden zweier Möbelteile, einen Beschlag mit einer Vorrichtung, sowie eine Schublade und ein Möbel.

### Stand der Technik

Eine bekannte Vorrichtung zum Verbinden zweier Möbelteile ist beispielsweise als ein Spannexzenter ausgebildet, wobei der Spannexzenter mit einer exzentrisch zu seiner Drehachse verlaufenden Spannkurve und mit einer radial verlaufenden Einführöffnung zum Einführen eines Spannkopfes in den Bereich der Spannkurve versehen ist. Der Spannexzenter wird beispielsweise in eine Sacklochbohrung eines Möbelteils eingesetzt. Zusätzlich weist das Möbelteil eine Querbohrung auf, welche in die Sacklochbohrung hineinreicht. Der dem Sacklochboden zugewandte untere Bereich des Spannexzenters weist gegenüber der kreisförmigen Rundfläche des Spannexzenters eine vorstehende Mantelfläche auf. Beim Drehen des Spannexzenters aus der Vormontageposition heraus in Richtung der Querbohrung gelangt diese Mantelfläche in eine Spannposition in der Sacklochbohrung. Derartige Vorrichtungen sind bspw. bereits aus der DE 20 302 694 U1 und der WO 2006 047 402 A2 bekannt.

### Aufgabe und Vorteile der Erfindung

Der Erfindung liegt die Aufgabe zugrunde, eine vergleichsweise kostengünstige Vorrichtung zum Verbinden zweier Möbelteile bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Vorrichtung zum Verbinden zweier Möbelteile aus. Die Vorrichtung umfasst ein an einem ersten Möbelteil anordenbares Gehäuse und ein im Gehäuse drehbar gelagertes Exzenterelement. Das Gehäuse ist an einer Wandseite abgeflacht und die abgeflachte Wandseite des Gehäuses weist eine durchgehende Öffnung auf. Das Exzenterelement ist dazu ausgebildet, mit einem Verbindungselement zusammenzuwirken, welches an einem zweiten Möbelteil anordenbar ist. Außerdem kann das Verbindungselement mit dem Gehäuse und dem Exzenterelement derart gekoppelt werden, dass das erste und das zweite Möbelteil fest miteinander verbunden sind.

Der wesentliche Aspekt der Erfindung ist nun darin zu sehen, dass die durchgehende Öffnung des Gehäuses an der abgeflachten Wandseite durch Wandabschnitte randseitig vollständig umschlossen ist.

Das erste Möbelteil kann ein Bodenelement eines Möbels sein, insbesondere ein Bodenelement einer Schublade. Das zweite Möbelteil kann ein Wandelement eines Möbels sein, z.B. eine Frontblende oder ein Rückwandelement einer Schublade.

Das Gehäuse kann insbesondere von unten in eine große flache Seitenfläche des ersten Möbelteils, insbesondere den Schubladenboden, eingesetzt sein. Hierdurch ist die Vorrichtung für einen Nutzer des Möbelteils, welcher das Möbelteil bei normaler Nutzung ausschließlich seitlich oder von oben betrachtet, nicht sichtbar.

Vorteilhafterweise wird das Gehäuse in eine vorbereitete Bohrung in das erste Möbelteil eingesetzt. Dies ermöglicht eine vergleichsweise kostengünstige Fertigung des ersten Möbelteils. Die Bohrung wird vorteilhaft an einer großen flachen Seitenfläche des ersten Möbelteils, beispielsweise an der oberen und/oder unteren Fläche eines Schubladenbodens angebracht. Hierbei kann die Bohrung als Sacklochbohrung ausgeführt sein.

Außerdem ist das Zentrum der Bohrungsachse vorteilhaft in einem geringeren Abstand zu einer Außenkante des ersten Möbelteils angeordnet als der Bohrungsradius. Dadurch erhält eine schmale Seitenfläche des ersten Möbelteils im Bereich der Sacklochbohrung einen Ausbruch. Eine zusätzliche, gegebenenfalls notwendige Querbohrung kann dadurch kostengünstig vermieden werden.

Das Gehäuse kann derart in die z.B. Sacklochbohrung eingesetzt werden, dass die abgeflachte Wandseite mit der Öffnung den Ausbruch verschließt und aus einer seitlichen Sicht auf die schmale Seite das erste Möbelteil sichtbar ist.

Vorteilhafterweise ist das Gehäuse derart in das erste Möbelteil eingesetzt, dass sich die abgeflachte Wandseite des Gehäuses bündig mit der schmalen Seite des ersten Möbelteils zusammenfügt.

Das Gehäuse besitzt vorzugsweise Seitenwände, wobei an einer Seitenwand und/oder an einem Bereich einer Seitenwand die abgeflachte Wandseite mit der durchgehenden Öffnung vorgesehen ist, insbesondere ist die abgeflachte Wandseite eine Außenseite des Gehäuses und/oder ein Bestandteil einer Außenseite des Gehäuses. Das Gehäuse umfasst zusätzlich eine Deckwand, die z.B. senkrecht zu den Seitenwänden steht.

Vorzugsweise ist das Gehäuse an den Seitenwänden zylinderförmig mit einer Zylinderachse, welche auf eine Mittelachse des Gehäuses fällt. Das zylinderförmige Gehäuse hat beispielsweise einen vergleichsweise kleineren Außendurchmesser als die Bohrung des ersten Möbelteils. Das Gehäuse ist somit zum Beispiel topfartig gestaltet. Hierdurch ist es möglich das Gehäuse vorteilhafterweise, insbesondere in einer werkzeuglosen Montage, in eine Bohrung des ersten Möbelteils, beispielsweise mit etwa 32mm Durchmesser als Standardbohrung, einzusetzen.

Außerdem kann das Gehäuse innere Gehäuseabschnitte aufweisen, mit welchen das in das Gehäuse eingesetzte Exzenterelement drehbar geführt und positioniert wird.

Weiterhin kann das Exzenterelement entlang einer Mittelachse des Gehäuses, insbesondere parallel dazu, in das Gehäuse eingesetzt und/oder eingeschoben werden. Günstigerweise liegt eine Rotationsachse des Exzenterelements im eingesetzten Zustand des Exzenterelements im Gehäuse auf der Mittelachse des Gehäuses. Eine Rotationsachse des Exzenterelements im eingesetzten Zustand des Exzenterelements im Gehäuse kann aber auch insbesondere senkrecht zur Mittelachse des Gehäuses ausgerichtet sein.

Das Exzenterelement kann aus einem Metall, Holz und/oder Kunststoff oder einer Kombination der Materialien hergestellt sein.

In einer weiteren vorteilhaften Variante der Erfindung ist das Exzenterelement hebelartig ausgebildet, wobei ein Spannelement an einem ersten Ende des Exzenterelements angeordnet ist und wobei das Exzenterelement am zweiten Ende ein Montageelement umfasst.

Das hebelartig ausgebildete Exzenterelement kann vorteilhafterweise derart ausgestaltet sein, dass es mit dem zweiten Ende, z.B. seinem Montageelement, voran parallel und/oder annähernd parallel zur Mittelachse, beispielsweise in einem Winkelbereich bzw. Kegelwinkelbereich zwischen ± 30°, und/oder entlang der Mittelachse und/oder parallel und/oder annähernd parallel zu einer Seitenwand des Gehäuses in das Gehäuse eingeführt wird und mit seinem Montageelement durch das Gehäuse beispielsweise durch gesteckt und/oder durch geschoben wird.

Die Mittelachse des Gehäuses steht bevorzugt senkrecht auf der Deckwand und parallel zu den Seitenwänden des Gehäuses und ist insbesondere von den Seitenwänden in senkrechtem Abstand zu den Seitenwänden gleichmäßig weit beabstandet.

Das Gehäuse kann beispielsweise aus Metall, vorteilhaft Druckguss, insbesondere Kunststoff oder einer Verbindung der Materialien bestehen. Das Gehäuse kann in einem Spritzgieß- und/oder Druckguss-Verfahren vergleichsweise kostengünstig hergestellt werden.

Das erste und zweite Möbelteil kann in bekannter Art derart zusammengesetzt sein, dass die schmale Seite des ersten Möbelteils an eine große Seitenfläche des zweiten Möbelteils im montierten Zustand der Vorrichtung bündig anstößt.

Bei einer vorteilhaften Ausführungsform der Vorrichtung ist die Öffnung des Gehäuses derart ausgestaltet, dass das Verbindungselement in einer Bewegung senkrecht zur abgeflachten Wandseite in Richtung des Exzenterelements durch die Öffnung hindurchragend in das Gehäuse eingeschoben werden kann.

Das Verbindungselement ist z.B. mit seinem ersten Ende am zweiten Möbelteil befestigt und mit seinem zweiten Ende abstehend vom zweiten Möbelteil angeordnet.

Bei einer Montage wird das Verbindungselement mit dem zweiten Ende senkrecht oder im Wesentlichen senkrecht oder mit gegebenenfalls einem vordefinierten Kippwinkel zur schmalen Seitenfläche in Richtung des bereits montierten Gehäuses und des Exzenterelements durch die Öffnung des Gehäuses in das Gehäuse und das Exzenterelement eingeschoben. Dadurch ragt das Verbindungselement im montierten Zustand der beiden Möbelteile und der Vorrichtung mit seinem zweiten Ende durch die Öffnung in das Gehäuse und das Exzenterelement hinein.

Der Kippwinkel liegt vorzugsweise in einem Bereich zwischen 0° und 45°, insbesondere in einem Bereich zwischen 0° und 30°.

Das Exzenterelement kann außerdem in bekannter Art derart ausgestaltet sein, dass durch einen Drehvorgang des Exzenterelements bei einer Montage eine Kraft auf das mit dem zweiten Ende in das Exzenterelement eingesetzte Verbindungselement wirkt mit einer Kraftrichtung parallel zur Deckwand des Gehäuses und senkrecht zur schmalen Seitenfläche des ersten Möbelteils. Die Kraft kann durch eine bekannte Vorrichtung am Exzenterelement, beispielsweise einer exzentrische wirkenden Vorrichtung, welche auf das zweite Ende des Verbindungselements wirkt, erzeugt werden.

Vorteilhaft ist auch, dass an einer Stirnseite des Exzenterelements ein Montageelement ausgebildet ist.

In das Montageelement des Exzenterelements kann z.B. ein Montagewerkzeug, beispielsweise ein Schraubenzieher und/oder ein Innensechskant-Schlüssel eingreifen. Hierdurch ist es möglich, mit dem Montagewerkzeug das Exzenterelement um seine Rotationsachse vergleichsweise einfach zu drehen. Insbesondere kann auf jeder Stirnseite des Exzenterelements ein Montageelement für ein Montagewerkzeug ausgebildet sein. Das Exzenterelement wird vorteilhaft mit einer der Stirnseiten in das Gehäuse eingesetzt und die zweite Stirnseite ist der ersten Stirnseite z.B. parallel gegenüberliegend am Exzenterelement angeordnet.

Überdies von Vorteil ist, dass eine Rotationsachse des Exzenterelements im eingesetzten Zustand im Gehäuse senkrecht zur abgeflachten Wandseite ausgerichtet ist.

Ein Nutzer kann das Montageelement, welches beispielsweise am hebelartigen Exzenterelement angeordnet ist, auch direkt bedienen, beispielsweise mit seinen Händen und/oder Fingern. Zum Beispiel kann ein Nutzer das Exzenterelement durch eine Kraftwirkung auf das Montageelement um eine Rotationsachse klappen und/oder verdrehen.

Vorteilhaft ist auch, dass ein Stützabschnitt der abgeflachten Wandseite als ein bei einer üblichen Montage verformbarer Bereich ausgebildet ist.

Der Stützabschnitt der abgeflachten Wandseite ist beispielsweise als elastisches Element und/oder Federelement ausgebildet. Der Stützabschnitt kann aber auch derart ausgestaltet sein, dass er sich bei der üblichen Montage plastisch verformt.

Vorteilhaft wirkt der Stützabschnitt im montierten Zustand der Vorrichtung und der Möbelteile entgegen der Kraftrichtung, welche das Exzenterelement auf das Verbindungselement ausübt. Hierdurch wird eine kraftwirkende Unterstützung entgegen der Kraftrichtung des Exzenterelements erzeugt und das Verbindungselement insbesondere vordefiniert verspannt.

Erfindungsgemäß weist die abgeflachte Wandseite des Gehäuses auf ihrer Außenseite, insbesondere auf einer Außenseite des Gehäuses, auf ihrer Oberfläche eine Struktur auf.

Erfindungsgemäß weist die Außenseite eine Oberflächenstruktur in Form einer Quer- und/oder Längsriffelung auf. Die Riffelung kann auch schräg an der Außenseite ausgeführt sein, beispielsweise in einem Winkel von 45° zur Mittelachse des Gehäuses. Auch ist es vorstellbar, dass die Oberfläche der Außenseite eine zusätzliche, um 90° zur ersten Riffelung gedrehte Riffelung, aufweist. Hierdurch ist die Oberfläche der Außenseite als sogenannte Rändeloberfläche ausgeführt. Diese Riffel- bzw. Rillenstruktur ermöglicht, bei der Montage eine Höhen- und/oder Längs-Einstellung der beiden Möbelteile zueinander.

Zusätzlich kann das Verbindungselement durch die Oberflächenstruktur vorteilhaft an der abgeflachten Wandseite des Gehäuses im montierten Zustand abgestützt werden.

In einer vorteilhaften Modifikation der Erfindung ist an einem stirnseitigen Bereich des Exzenterelements ein Spannelement angeordnet, wobei das Exzenterelement mit der dem Spannelement gegenüberliegenden Seite zuerst in das Gehäuse eingesetzt werden kann.

Vorteilhaft kann das Spannelement auch an einer Stirnseite des Exzenterelements angeordnet sein.

Das Spannelement ist zum Beispiel am Exzenterelement in einer Weise angeordnet, dass es im montierten Zustand der Vorrichtung vorzugsweise auf der dem ersten Möbelteil zugewandten Seite liegt.

Vorteilhaft ist das Spannelement von den Seitenflächen des Exzenterelements abstehend angeordnet, beispielsweise radial abstehend, insbesondere senkrecht zu einer Verbindungsachse der beiden Stirnseiten des Exzenterelements und/oder einer Verbindungsachse der beiden Enden des hebelartigen Exzenterelements.

Beispielsweise ist das Spannelement als flache Scheibe ausgebildet und mit einer flachen Seite an einer Stirnseite des Exzenterelements fest angeordnet oder geklemmt. Die Scheibe kann dabei einen größeren Radius aufweisen als der Abstand der Seitenfläche des Exzenterelements zur Verbindungsachse der Stirnseiten. Insbesondere ist die Scheibe mittig an der Stirnseite des Exzenterelements angeordnet.

Des Weiteren ist es von Vorteil, dass das Spannelement als flache Scheibe mit einer Aussparung ausgebildet ist.

Vorzugsweise ist das Spannelement eine Scheibe und an einer Schmalseite abgeflacht ausgebildet. Insbesondere ist an der abgeflachten Schmalseite eine Öffnung beispielsweise ein Schlitz oder Spalt in Richtung Scheibenmitte ausgebildet. Dadurch ist es möglich, das Verbindungselement von der Stirnseite des Exzenterelements kommend durch die Öffnung des Spannelements in das Exzenterelement einzusetzen.

In einer vorteilhaften Ausgestaltungsform besitzt das Spannelement eine Aussparung. Dadurch ist es möglich, mit einem Montagewerkzeug durch die Aussparung in ein Montageelement des Exzenterelements einzugreifen und das Exzenterelement dadurch beispielsweise zu drehen und die Vorrichtung mit dem Verbindungselement zu verspannen.

Das Spannelement kann aber auch als keilförmiges und/oder sich in eine Richtung, vorteilhaft in eine Dreh-und/oder Bewegungsrichtung des Exzenterelements, verjüngendes Element abstehend am Exzenterelement ausgebildet sein.

Überdies von Vorteil ist, dass eine Deckwand des Gehäuses über eine Seitenwand des Gehäuses überstehend angeordnet ist.

Die Deckwand des Gehäuses ist beispielsweise als flaches Plattenelement mit einer vergleichsweise größeren Grundfläche ausgebildet als die Kontur der Seitenwände, die das Gehäuse begrenzen. Dadurch steht die Deckwand vorteilhaft über zumindest einen Seitenwandabschnitt des Gehäuses über. Insbesondere ist die Deckwand derart ausgebildet und an das Gehäuse angeordnet, dass sie nicht über den Wandabschnitt der abgeflachten Wandseite übersteht. Vorzugsweise ist die Deckwand bündig an die abgeflachte Wandseite angeordnet. Insbesondere kann ein Bereich der Deckwand Bestandteil der abgeflachten Wandseite sein.

Im angeordneten Zustand des Gehäuses am ersten Möbelteil ist die Deckwand vorteilhaft auf der dem ersten Möbelteil abgewandten Seite des Gehäuses angeordnet und überdeckt ästhetisch unschöne Bohrungsränder des ersten Möbelteils.

Außerdem vorteilhaft ist es, wenn die Deckwand eine Aussparung aufweist, wodurch ermöglicht wird, mit einem Montagewerkzeug ein in das Gehäuse eingesetztes Exzenterelement zu bedienen und das Exzenterelement vergleichsweise einfach zu drehen. Außerdem kann die Aussparung der Deckwand ermöglichen, das z.B. hebelartige Exzenterelement mit seinem zweiten Ende, zum Beispiel dem Montageelement, durch die Deckwand zu stecken und/oder zu schieben.

Vorteilhaft erweist sich auch, dass das Gehäuse ein Sicherungsorgan umfasst.

Das Sicherungsorgan dient z.B. als Verdrehsicherung und kann auf der gegenüberliegenden Seite der Öffnung des Gehäuses an der Deckwand in die gleiche Richtung wie die Seitenwände des Gehäuses abstehend angeordnet sein. Vorzugsweise ist das Sicherungsorgan im Vergleich zu den Seitenwänden kürzer abstehend ausgebildet.

Vorteilhafterweise kann das Sicherungsorgan an die Deckwand geklemmt und/oder geklebt und/oder geschweißt und/oder geschraubt und/oder genietet sein, insbesondere ist das Gehäuse mit der Deckwand und dem Sicherungsorgan als eine Einheit, beispielsweise mittels eines Spritzgießprozesses hergestellt.

Das Sicherungsorgan ist beispielsweise als Stift oder Pin zylinderförmig ausgebildet und über die Deckwand vorteilhaft starr und mechanisch stabil mit dem Gehäuse gekoppelt.

Weiter wird vorgeschlagen, dass an der den Seitenwänden gegenüberliegenden Seite der Deckwand ein Kopplungsmittel angeordnet ist.

An das Kopplungsmittel kann ein Kopplungselement, beispielsweise eine Synchronstange, beweglich angeordnet werden. Die Synchronstange kann dabei auf zwei separat angeordnete Ausstoßeinheiten wirken und dient dazu, die Funktion der Ausstoßeinheiten zu synchronisieren.

Das Kopplungsmittel kann aber auch derart ausgebildet sein, direkt mit einer Ausstoßeinheit zusammenzuwirken.

Auch ist es von Vorteil, dass das Verbindungselement mehrteilig ausgebildet ist, insbesondere zweiteilig, bestehend aus einem Dübelorgan und einem Kopplungsorgan.

Vorteilhafterweise umfasst das Verbindungselement ein Dübelorgan, ein Kopplungsorgan und ein Justageorgan.

In seiner Außenkontur ist das Verbindungselement vorteilhaft annähernd als Verbindungsbolzen mit einer ausgezeichneten Längsachse ausgestaltet.

Vorteilhaft ist das Verbindungselement aus einem, beispielsweise aus Kunststoff hergestellten, Dübelorgan und einem, vorzugsweise aus Druckguss, insbesondere aus Kunststoff hergestellten, Kopplungsorgan zusammengesetzt.

Die Kunststoffe des Dübelorgans und des Kopplungsorgans unterscheiden sich in ihren physikalischen Eigenschaften vorteilhaft.

Das Dübelorgan bildet das erste Ende des Verbindungselements und wird im zusammengesetzten Zustand parallel zur Längsachse des Verbindungselements in das zweite Möbelteil eingesetzt. Das Kopplungsorgan bildet das zweite Ende des Verbindungselements und wird, in Richtung der Längsachse des Verbindungselements, im zusammengesetzten Zustand durch die Öffnung in das Gehäuse und in das Exzenterelement eingeschoben.

### Beschreibung der Ausführungsbeispiele

Zwei Ausführungsbeispiele werden anhand der nachstehenden schematischen Zeichnungen unter Angabe weiterer Einzelheiten und Vorteile näher erläutert.

Es zeigen:
- Figur 1: eine perspektivische Ansicht von seitlich oben auf eine erste Variante eines Exzenterelements,
- Figur 2: eine seitliche Ansicht auf das Exzenterelement aus Figur 1,
- Figur 3: eine seitliche Ansicht auf ein Verbindungselement,
- Figur 4: eine perspektivische Ansicht von seitlich oben auf ein erste Variante eines Gehäuses,
- Figur 5: eine seitliche Ansicht auf das Gehäuse aus Figur 4,
- Figur 6: eine Aufsicht von oben auf das Gehäuse aus Figur 4,
- Figur 7: eine perspektivische Teilansicht aus Figur 4 auf eine durchgehende Öffnung des Gehäuses,
- Figur 8: eine perspektivische Ansicht von seitlich vorne unten auf eine erfindungsgemäße Vorrichtung bestehend aus dem Gehäuse, dem Exzenterelement und dem daran angeordneten Verbindungselement,
- Figur 9: eine weitere perspektivische Ansicht von seitlich hinten unten auf die Vorrichtung nach Figur 8,
- Figur 10: eine seitliche Ansicht auf einen Querschnitt durch die Vorrichtung nach Figur 8 und einer Schubladenfront und einem Schubladenboden (gestrichelt angedeutet),
- Figur 11: eine Aufsicht von oben auf die Anordnung nach Figur 10,
- Figur 12: eine perspektivische Ansicht von seitlich unten auf eine weitere Variante eines erfindungsgemäßen Gehäuses,
- Figur 13: eine perspektivische Ansicht von der Seite auf ein weiteres erfindungsgemäßes hebelartiges Exzenterelement,
- Figur 14: eine seitliche Ansicht auf eine abgeflachte Wandseite des Gehäuses aus Figur 12 mit in das Gehäuse eingesetztem Exzenterelement aus Figur 13 in geöffneter Position,
- Figur 15: eine seitliche Ansicht nach Figur 14 in einer geschlossenen Position,
- Figur 16: eine perspektivische Ansicht von seitlich unten auf die Anordnung nach Figur 15,
- Figur 17: eine perspektivische Ansicht von seitlich unten auf die Anordnung nach Figur 14 mit eingeschobenem Verbindungselement,
- Figur 18: ein Querschnitt senkrecht zur abgeflachten Wandseite durch das Gehäuse und das Verbindungselement der Anordnung nach Figur 17,
- Figur 19: ein Querschnitt durch das Gehäuse senkrecht zur abgeflachten Wandseite in geschlossener Position und
- Figur 20: eine perspektivische Ansicht von seitlich vorne auf ein erfindungsgemäßes Möbel mit einer erfindungsgemäßen Schublade in einem geöffneten Zustand.

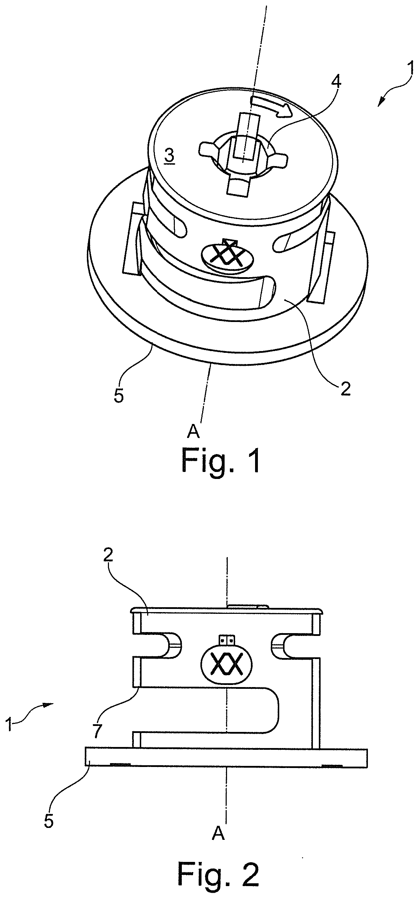

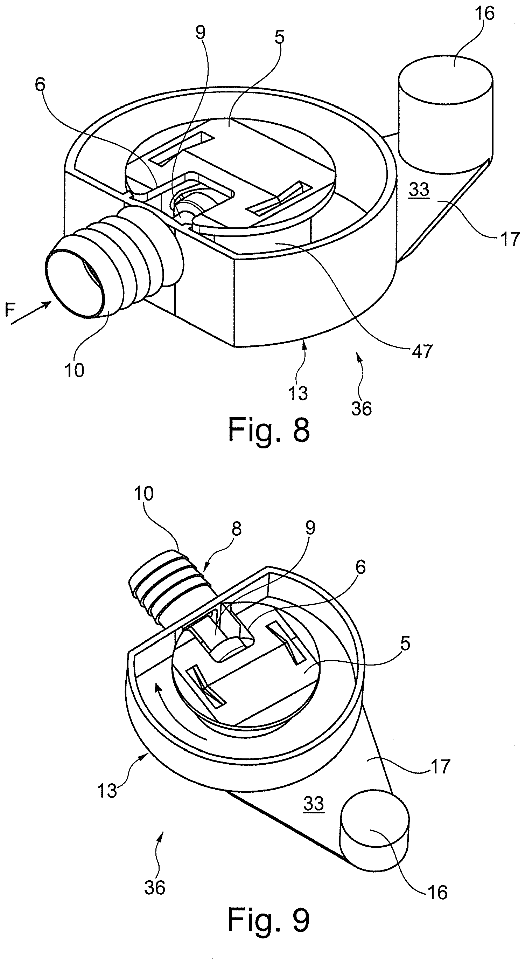

In den Figuren 1 und 2 ist ein Exzenterelement 1 dargestellt, welches einen zylinderförmigen Grundkörper 2 mit einer Zylinderachse A umfasst. An einer Stirnseite 3 des zylinderförmigen Grundkörpers ist ein Montageelement 4 ausgebildet. Auf der der Stirnseite 3 gegenüberliegenden Stirnseite des Grundkörpers 2 ist ein Spannelement 5 angeordnet, welches als kreisförmige flache Scheibe mit einem größeren Radius als der zylinderförmige Grundkörper 2 des Exzenterelements 1 ausgebildet ist. Das Spannelement 5 ist zum Beispiel an einer Seite mit einer Aussparung 6 versehen (Figur 8, 9). Die Aussparung 6 ist derart ausgestaltet, dass zum einen ein äußerer Abschnitt des scheibenförmigen Spannelements 5 abgeflacht ist und zum anderen an dieser abgeflachten Stelle eine Ausbuchtung ausgebildet ist, durch welche ein Kopplungsorgan 9 eines Verbindungselements 8 parallel und/oder in einem definierten Winkel zur Zylinderachse A von oben in das Exzenterelement 1 eingesetzt werden kann. Außerdem ist am zylinderförmigen Umfang des Grundkörpers 2 eine schlitzartige Öffnung 7 ausgebildet, in welche ein Kopplungsorgan 9 eines Verbindungselements 8 senkrecht und/oder in einem definierten Winkel zur Zylinderachse A in das Exzenterelement 1 eingeschoben werden kann.

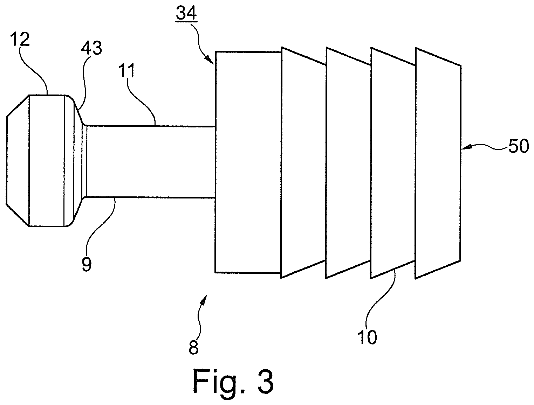

Das stiftartige Verbindungselement 8 besteht an seinem ersten Ende aus dem Kopplungsorgan 9 und am zweiten Ende aus einem Dübelorgan 10 (Figur 3). Das Kopplungsorgan 9 ist als zylinderförmiger Stift 11 und einem daran angeordneten Kopf 12 ausgebildet, welcher am freien ersten Ende des Verbindungselements 8 angeordnet ist. Der Kopf 12 ist derart ausgestaltet, dass die schlitzartige Öffnung 7 des Exzenterelements 1 den Kopf 12, an seiner dem freien ersten Ende abgewandten Seite 43, hintergreifen kann. Das Dübelorgan 10 ist zylinderförmig ausgestaltet und weist zum Beispiel einen größeren Durchmesser als der Kopf 12 und der Stift 11 auf. An seiner Außenseite ist das Dübelorgan 10 im Querschnitt betrachtet in seiner Silhouette überwiegend zackenartig ausgestaltet. An der dem zweiten freien Ende des Verbindungselements 8 abgewandten Seite weist das Dübelorgan 10 außerdem eine Kontaktfläche 34 auf.

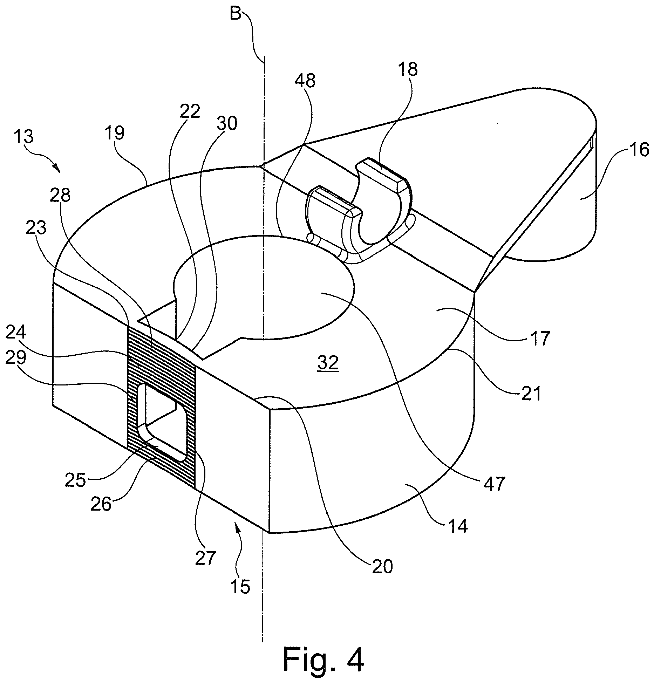

Ein Gehäuse 13 einer erfindungsgemäßen Vorrichtung 36 ist in Figur 4 gezeigt. Das Gehäuse 13 besitzt eine zylinderförmige Seitenwand 14 mit einer abgeflachte Wandseite 15 und ein Sicherungsorgan 16, welches über eine Deckwand 17 mit der Seitenwand 14 fest verbunden ist. Die Deckwand 17 ist senkrecht zu der Seitenwand 14 und der abgeflachten Wandseite 15 und dem Sicherungsorgan 16 ausgerichtet und an diese fest angeordnet. Außerdem sind die Seitenwand 14, die abgeflachte Wandseite 15 und das Sicherungsorgan 16 auf einer Wandseite 33 der Deckwand 17 in die gleiche Richtung abstehend angeordnet (Figur 8, 9). Auf einer, der Wandseite 33 gegenüberliegenden Wandseite 32 der Deckwand 17 ist ein Kopplungsmittel 18 abstehend ausgebildet. Außerdem ist am Gehäuse 13 ein Gehäuseabschnitt 47 ausgebildet, welcher ein in das Gehäuse 13 eingesetztes Exzenterelement 1 beweglich, insbesondere um die Zylinderachse A drehbar, führt.

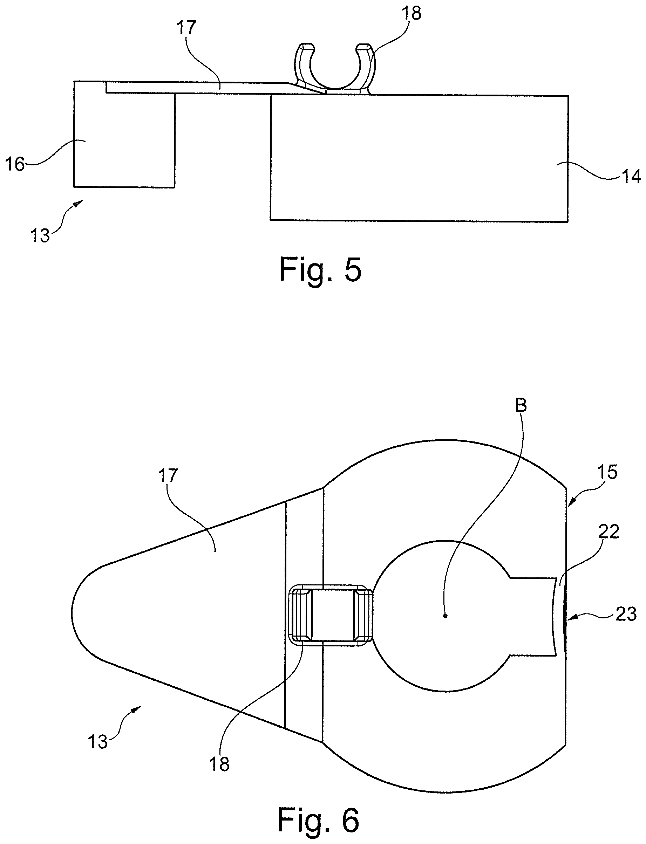

In einer Aufsicht auf das Gehäuse 13 betrachtet, ist die Deckwand 17 in ihrer Außenkontur 19, 20, 21 bündig mit der Seitenwand 14 und der abgeflachten Wandseite 15 ausgeführt (Figur 4, 6). Außerdem endet der Gehäuseabschnitt 47 an der Deckwand 17 in einer Montageöffnung 48. Die Montageöffnung 48 ermöglicht den Eingriff eines Montagewerkzeugs in das Montageelement 4 des Exzenterelements 1.

An der abgeflachten Wandseite 15 ist ein Stützabschnitt beispielsweise in Form eines Federelements 22 ausgebildet. Das Federelement 22 weist auf seiner Außenseite 23 eine Oberflächenstruktur 24 auf. Außerdem ist am Federelement 22 eine Öffnung 25 ausgebildet. Die Öffnung 25 ist durch Wandabschnitte 26 bis 29 randseitig vollständig umschlossen. Außerdem kann das Federelement 22 derart ausgestaltet sein, dass es mit seiner Außenseite 23 und seiner Innenseite 30 in Richtung einer Mittelachse B des Gehäuses 13 gewölbt ist. Durch diese Ausgestaltung ist das Federelement 22 vorgespannt.

Die Öffnung 25 ist außerdem derart ausgestaltet, dass das Verbindungselement 8 mit seinem Kopplungsorgan 9 von der Außenseite 24 kommend durch die Öffnung 25 in Richtung der Mittelachse B in das Gehäuse 13 eingeschoben werden kann.

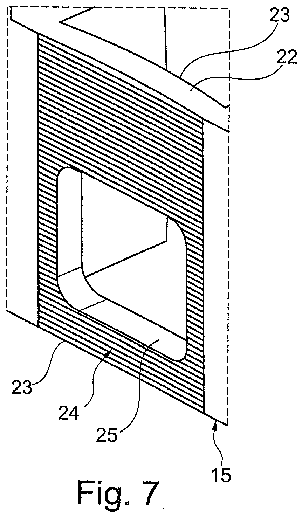

Die Außenseite 23 des Federelements 22 weist eine rillenartige Oberflächenstruktur 24 auf. Die Rillenstruktur ist zum Beispiel parallel zur Oberfläche 32 der Deckwand 17 ausgerichtet (Figur 7).

Wie in Figur 8, 9 dargestellt, wird das Exzenterelement 1 zunächst mit seiner Stirnseite 3 in Richtung der Innenfläche 33 der Deckwand 17 in den Gehäuseabschnitt 47 des Gehäuses 13 eingesetzt. Das Spannelement 5 des Exzenterelements 1 liegt im montierten Zustand beweglich auf einer schmalen Seitenfläche des Gehäuseabschnitts 47 auf. Weiterhin wird das Exzenterelement 1 in einem ersten Montageschritt derart ausgerichtet, dass das Verbindungselement 8 durch die Öffnung 25 in Richtung der Mittelachse B des Gehäuses 13 in das Gehäuse 13 und in die schlitzartige Öffnung 7 des Exzenterelements 1 eingeschoben werden kann.

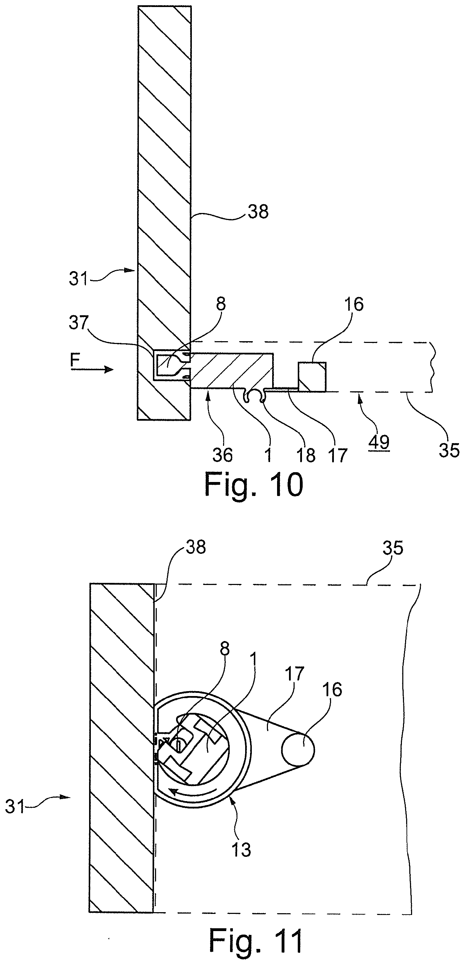

Um das Verbindungselement 8 relativ zum Gehäuse 13 in einem anschließenden Montageschritt zu fixieren, wird das Exzenterelement 1 aus Sicht von unten, mit Blick auf die Innenfläche 33 der Deckwand 17, im Uhrzeigersinn (Figur 9, 11) verdreht. Durch die Verdrehung hintergreift die schlitzartige Öffnung 7 des Exzenterelements 1 den Kopf 12 des Kopplungsorgans 9 des Verbindungselements 8 und zieht das Verbindungselement 8 mit einer Kraft F in Richtung der Rotationsachse A des Exzenterelements 1 in das Gehäuse 13 bzw. das Exzenterelement 1 (Figur 8).

Ein Querschnitt der an einem ersten Möbelteil, einer Schubladenfront 31 und einem zweiten Möbelteil, einem Schubladenboden 35 (transparent dargestellt, Silhouette durch gestrichelte Linien angedeutet) angeordneten Vorrichtung 36 im angeordneten und montierten Zustand ist in Figur 10 gezeigt.

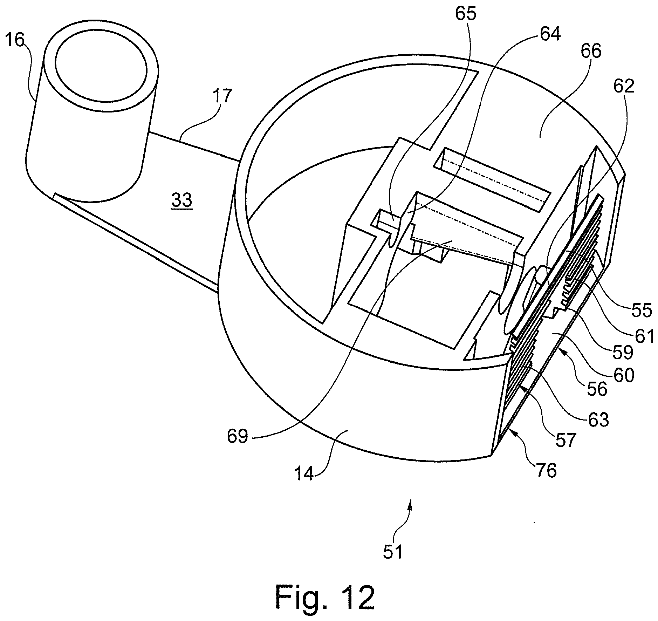

Ein Gehäuse 51 einer weiteren Variante der Erfindung ist in den Figuren 12 und 14 bis 19 dargestellt. Das Gehäuse 51 weist einen Stützabschnitt auf, welcher als z.B. keilförmiges Wandelement 55 ausgebildet ist. Das Wandelement 55 ist insbesondere freistehend und z.B. mit der Deckwand 17 verbunden. Das keilförmige Wandelement 55 ist z.B. am dickeren Ende der Keilform an der abgeflachten Wandseite 76, insbesondere an der Deckwand 17, des Gehäuses 51 angeordnet.

An einer Oberfläche der Außenseite 56 des Wandelements 55 ist beispielsweise eine rillenförmige Oberflächenstruktur 57 ausgebildet, welche z.B. parallel zur Wandseite 33 der Deckwand 17 ausgerichtet ist. Außerdem ist am Wandelement 55 eine randseitig durch Wandabschnitte 60-63 umschlossene durchgehende Öffnung 59 ausgebildet.

Des Weiteren umfasst das Gehäuse 51 einen Gehäuseabschnitt 64, in welchen in einem ersten Montageschritt ein Exzenterelement 52 eingesetzt werden kann und in einem anschließenden Montageschritt das Verbindungselement 58. Das Verbindungselement 58 wird durch die Öffnung 59 in das Gehäuse 51 eingesetzt, wie bereits in der ersten Ausführungsform beschrieben.

Am Gehäuseabschnitt 64 sind zwei Lagerorgane 65, 66 vorhanden, in welche passende Lagerelemente 67, 68 des Exzenterelements 52 eingesetzt werden können. Dabei kann eine Lagerachse und/oder Rotationsachse C der Lagerorgane 65, 66 senkrecht zu einer Mittelachse des Gehäuses und parallel zu einer Montagerichtung D des Verbindungselements 58 und/oder einer Kraftrichtung D des Exzenterelements 52 ausgerichtet sein.

Außerdem kann am Gehäuseabschnitt 64 ein Klemmmittel 69 ausgebildet sein, durch welches ein Kopplungsorgan 70 des Verbindungselements 58 im montierten Zustand der Möbelteile 31, 35 und der erfindungsgemäßen Vorrichtung 81 klemmend gehalten werden kann.

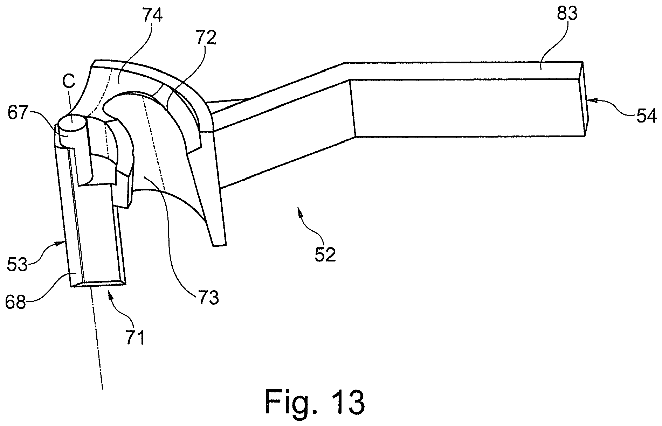

In Figur 13 ist das hebelartige Exzenterelement 52 gezeigt. Das Exzenterelement 52 umfasst an einem ersten Ende 53 die Lagerelemente 67, 68, ein Spannelement 71, eine Öffnung 72, ein Klemmelement 73 und ein Spannorgan 74. Am zweiten hebelartigen Ende 54 ist ein Montageelement 83 ausgebildet, welches ein Nutzer beispielsweise mit seinen Fingern greifen kann.

Das zweite Ende 54 des Exzenterelements 52 kann als längliches, schmales, leistenförmiges Element ausgebildet sein und ist z.B. in einem Winkel zum ersten Ende 53 des Exzenterelements 52 angeordnet. Das erste Ende 53 ähnelt in seiner Außenkontur z.B. einem Tortenstück, wobei die Lagerelemente 67, 68 sich gegenüberliegend an einem zulaufenden und/oder sich verjüngendem Abschnitt des ersten Endes 53 ausgebildet sind.

Das Exzenterelement 52 wird zunächst mit seinem zweiten Ende 54, dem Montageelement 83, voran in das Gehäuse 51 eingeschoben und mit seinem zweiten Ende 54 durch das Gehäuse 51 und die Deckwand 17 des Gehäuses 51 hindurchgeschoben, bis das Exzenterelement 52 mit seinen Lagerelementen 67, 68 anliegend und/oder aufliegen an den Lagerorganen 65, 66 ansteht. Somit kann das Exzenterelement 52 derart in das Gehäuse 51 eingesetzt werden, dass sein erstes Ende 53 im Gehäuse 51 und sein zweites Ende 54 außerhalb des Gehäuses 51 angeordnet ist.

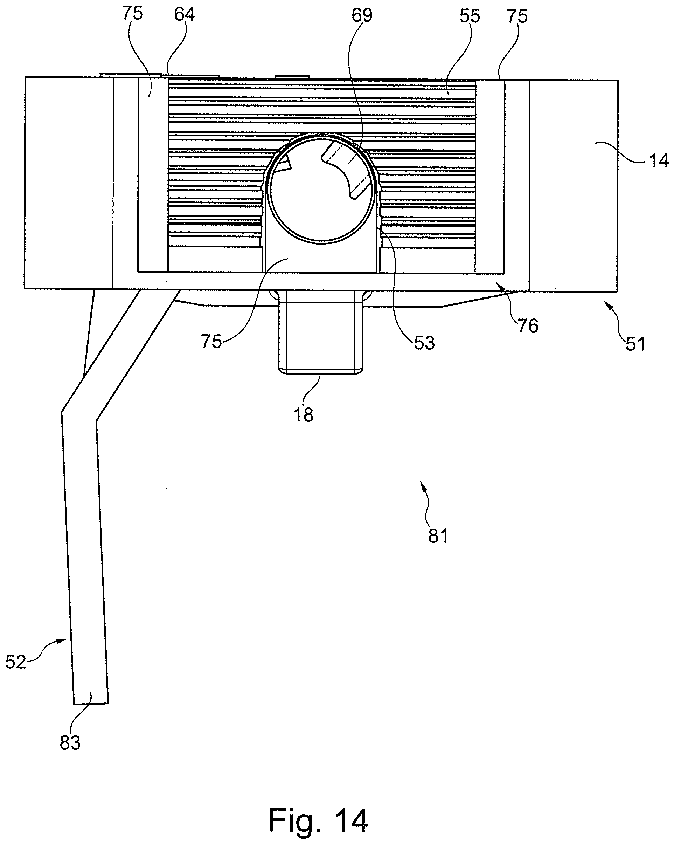

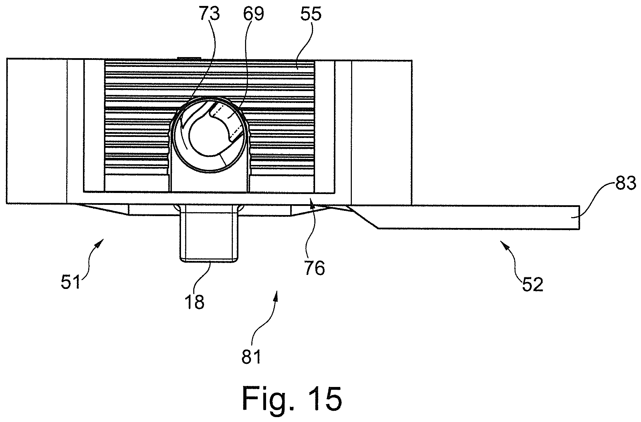

In einer seitlichen Ansicht auf die abgeflachte Wandseite 76 des Gehäuses 51 mit in das Gehäuse 51 eingeschobenem Exzenterelement 52 in einer offenen Position ist innerhalb der Öffnung 59 des Wandelements 55 das Klemmmittel 69 und eine Gehäusewand 75 gezeigt. In einer geschlossenen Position des Exzenterelements 52 im Gehäuse 51 ist zusätzlich das Klemmelement 73 des Exzenterelements 52 zu sehen. (Figuren 14, 15).

Das Klemmelement 73 ist beispielsweise trichterförmig ausgebildet, wobei die Trichterform des Klemmelements 73 sich in Richtung Gehäuseinneres verjüngen kann. Dies ermöglicht ein vergleichsweise einfaches und/oder gelenktes bzw. geführtes Einführen und/oder Einschieben und/oder Einsetzen des Verbindungselements 58 in das Gehäuse 51 und in das Exzenterelement 52. Das Klemmelement 73 kann weiterhin im geschlossenen Zustand zusammen mit dem Klemmmittel 69 des Gehäuses 51 ein in das Gehäuse 51 eingesetztes Verbindungselement 58 beispielsweise klemmend halten.

Vorteilhaft kann das Exzenterelement 52 von einer offenen (Figur 14) in eine geschlossene Position (Figur 15) am Gehäuse 51 versetzt werden, indem ein Nutzer am zweiten Ende 54 des Exzenterelements 52 beispielsweise das Montageelement 83 vorteilhaft einfach mit einer Kraft, z.B. durch einen Fingerdruck, in einer Drehbewegung in Richtung der Deckwand 17 bewegt. Die Drehachse der Drehbewegung ist hierbei vorteilhaft die Lagerachse C. Im geschlossenen Zustand des Exzenterelements 52 ist das Montagelement 83 anliegend und/oder parallel ausgerichtet zur Deckwand 17.

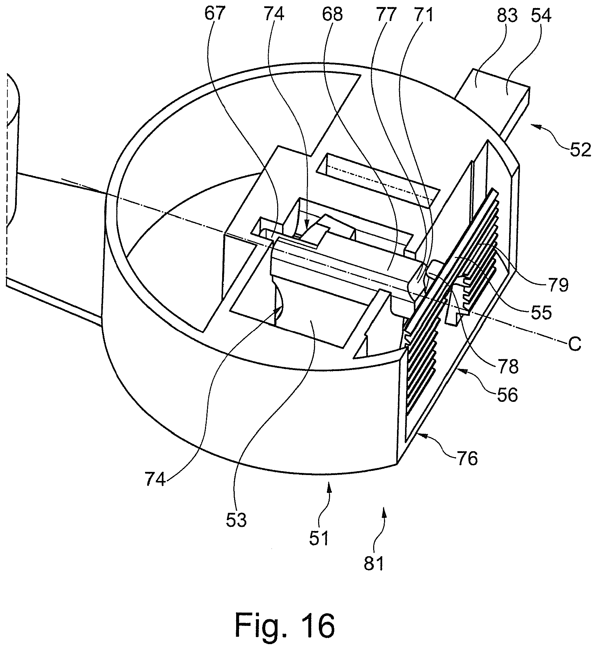

Im geschlossenen Zustand des Exzenterelements 52 am Gehäuse 51 drückt des Weiteren das Spannelement 71, welches beispielsweise eine Schräge 77 aufweist, gegen ein Anschlagsorgan 78 des Wandelements 55. Hierdurch wird vorteilhafterweise das Wandelement 55 in einem oberen Bereich 79, aufgrund der Kraftwirkung des Spannelements 71 und des vorteilhaft keilförmigen und sich in Richtung des oberen Bereichs 78 verjüngenden Wandelements 55, entgegen der Kraftrichtung D des Exzenterelements 52 bewegt und/oder gedrückt (Figur 16).

Das Verbindungselement 58 kann ein plattenartiges Justageorgan 50 umfassen, welches ungefähr in der Mitte des Verbindungselements 58 im Anschluss an ein Dübelorgan 80, beispielsweise am Dübelorgan 80 angeordnet ist. Das Justageorgan 50 kann auf der dem Dübelorgan 80 abgewandten Seite eine Rillenstruktur 82 aufweisen. Die Rillenstruktur 82 kann dabei derart ausgestaltet sein, dass sie mit der rillenförmigen Oberflächenstruktur 57 des Wandelements 55 zusammenwirken kann.

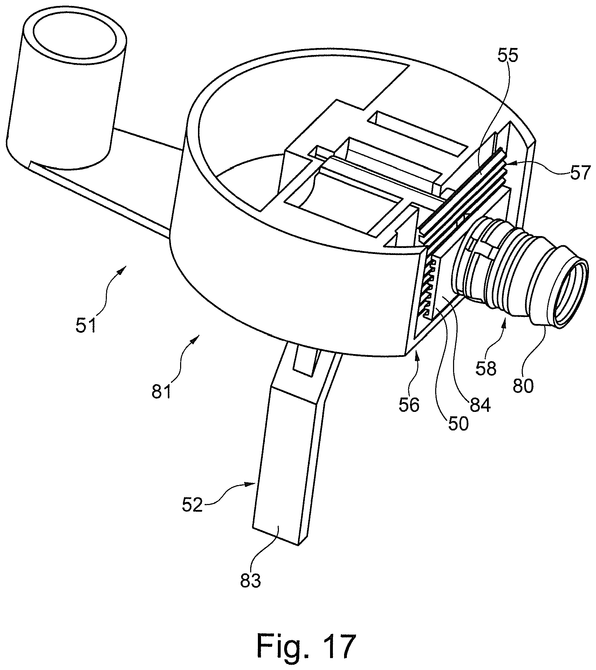

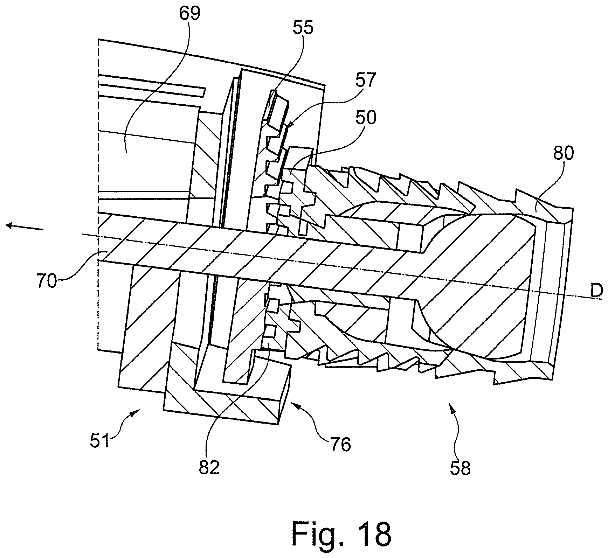

Durch die vorteilhafte Ausgestaltung des Justageorgans 80 und des Wandelements 55, insbesondere der Rillenform der Oberflächenstruktur 82, ist es möglich, im montierten Zustand der Vorrichtung 81 bei geöffnetem Exzenterelement 52 das Verbindungselement 58 gegenüber dem Gehäuse 51 bzw. dem Wandelement 55 seitlich zu verschieben bzw. zu verstellen, wohingegen eine Höhenverstellung, parallel zu einer Normalen der Deckwand 17, aufgrund der Rillenstruktur verhindert bzw. erschwert wird (Figur 17, 18).

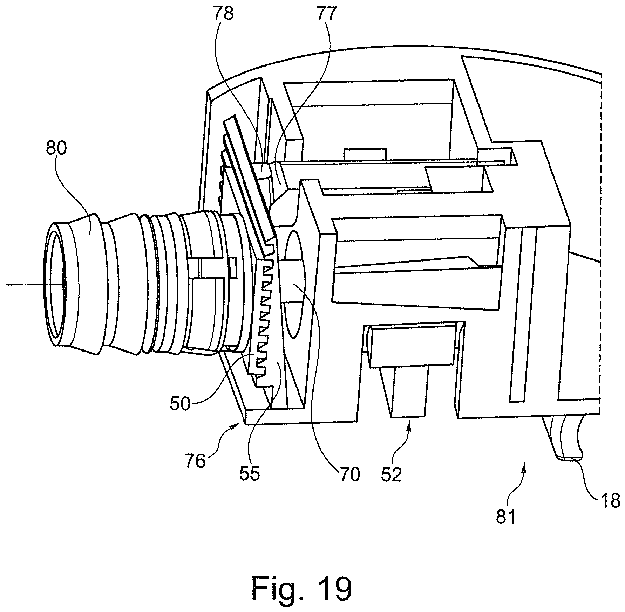

Im Verlauf der Schließbewegen des Exzenterelements 52 der Vorrichtung 81 von einer offenen Position in eine geschlossene Position und eingesetztem Verbindungselement 58 hintergreift das Exzenterelement 52 durch die exzentrische Ausgestaltung des Spannorgans 74 z.B. einen Kopf des Kopplungsorgans 70 des Verbindungselements 80 und drückt und/oder zieht das Verbindungselement 80 mit einer Kraftrichtung (D) in Richtung Gehäuse. Hierbei ist der Kopf des Verbindungselements 58 in bekannter Weise, wie beispielsweise oben beschrieben ausgestaltet. Durch diese Kraftwirkung und durch die entgegengesetzte Kraftwirkung des Spannelements 71 werden das Wandelement 55 und das Justageorgan 50 kraft- und/oder formschlüssig miteinander verbunden (Figur 19).

Insbesondere ist das Justageorgan 80 mit einer Außenseite 84 im angeordneten Zustand am Gehäuse 51 und in der geschlossenen Position des Exzenterelements 52 bündig oder annähernd bündig an einer Außenkante und/oder einer Außenseite 56 der abgeflachten Wandseite 76 und/oder des zweiten Möbelteils, beispielsweise einer Innenseite 38 der Schubladenfront 31, ausgerichtet.

Im Weiteren ist der Montagevorgang der Vorrichtung 36 beschrieben:
Das Verbindungselement 8 wird mit seinem Dübelorgan 10 in einem ersten Montageschritt in eine Bohrung 37 an der Innenseite 38 der Schubladenfront 31 eingesetzt und das Gehäuse 13, an welchem das Exzenterelement 1 bereits montiert ist, wird in einer entsprechende Aussparung im Schubladenboden 35 eingesetzt. Dabei wird das Gehäuse 13 mit der Seitenwand 14 und dem Sicherungsorgan 16 voran in Richtung der Aussparung des Schubladenbodens 35 derart eingesetzt, dass die Wandseite 32 der Deckwand 17 des Gehäuses 13 parallel und vorteilhaft eben zur Unterseite 49 des Schubladenbodens 35 ausgerichtet ist und die abgeflachte Wandseite 15 des Gehäuses bündig, eben und parallel zur schmalen Stirnseite des Schubladenbodens 35 ausgerichtet ist.

In einem weiteren Montageschritt wird das Verbindungselement 8 mit dem Kopplungsorgan 9 voran durch die Öffnung 25 des Gehäuses 13 in das Gehäuse 13 und in die Aussparung 6 des Exzenterelements 1 eingesetzt und in einem anschließenden Montageschritt das Exzenterelement 1 mit Hilfe eines Montagemittels, wie oben beschrieben, verdreht. Dadurch kommt die Kontaktfläche 34 des Verbindungselements 8 flächig zur Anlage an der Oberflächenstruktur 24 des Federelements 22. Außerdem wird zusätzlich das Federelement 22 entgegen der Zugrichtung des Verbindungselements 8 durch das Spannelement 5 nach außen, entgegen der Kraftrichtung F und in Richtung der Schubladenfront 31, gedrückt und gegen die Kontaktfläche 34 des Verbindungselements 8 gespannt (Figur 10, 11). Dieser Montagevorgang fixiert die Schubladenfront 31 mit dem Schubladenboden 35.

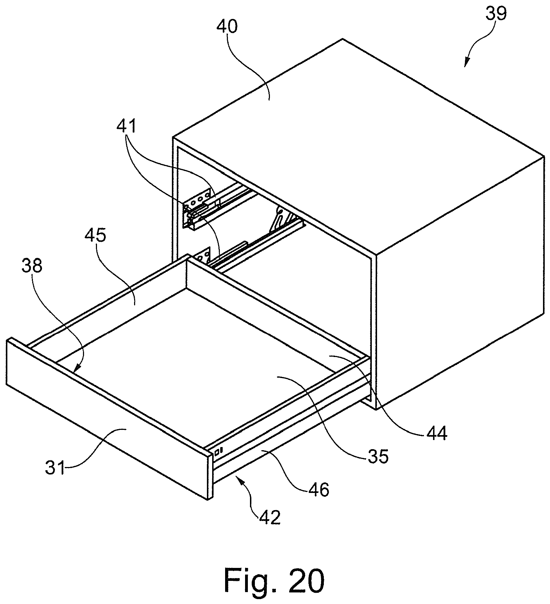

Ein erfindungsgemäßes Möbel 39, besteht zum Beispiel aus einem Möbelkorpus 40, im Möbelkorpus 40 angebrachte Schubladen-Führungsschienen 41 und einer daran angeordnete Schublade 42 bestehend aus der Schubladenfront 31, dem Schubladenboden 35, einer Schubladenrückwand 44 und Schubladenseitenwänden 45, 46. An der Unterseite des Schubladenbodens 35 der Schublade 42 ist die Vorrichtung 36 (nicht sichtbar) angeordnet (Figur 20).

### Bezugszeichenliste:

- 1 , 52: Exzenterelement
- 2: Grundkörper
- 3: Stirnseite
- 4 , 83: Montageelement
- 5 , 71: Spannelement
- 6: Aussparung
- 7 , 72: Öffnung
- 8 , 58: Verbindungselement
- 9 , 70: Kopplungsorgan
- 10 , 80: Dübelorgan
- 11: Stift
- 12: Kopf
- 13 , 51: Gehäuse
- 14: Seitenwand
- 15 , 76: Wandseite
- 16: Sicherungsorgan
- 17: Deckwand
- 18: Kopplungsmittel
- 19 - 21: Außenkontur
- 22 , 55: Stützabschnitt
- 23 , 56: Außenseite
- 24 , 57: Oberflächenstruktur
- 25 , 59: Öffnung
- 26 - 29: Wandabschnitt
- 30: Innenseite
- 31: Schubladenfront
- 32 - 33: Wandseite
- 34: Kontaktfläche
- 35: Schubladenboden
- 36 , 81: Vorrichtung
- 37: Bohrung
- 38: Innenseite
- 39: Möbel
- 40: Korpus
- 41: Führungsschiene
- 42: Schublade
- 43: Seite
- 44: Rückwand
- 45 - 46: Seitenwand
- 47 , 64: Gehäuseabschnitt
- 48: Montageöffnung
- 49: Unterseite
- 50: Justageorgan
- 53 - 54: Ende
- 60 - 63: Wandabschnitt
- 65 - 66: Lagerorgan
- 67 - 68: Lagerelement
- 69: Klemmmittel
- 73: Klemmelement
- 74: Spannorgan
- 75: Gehäusewand
- 77: Schräge
- 78: Anschlagsorgan
- 79: Bereich
- 82: Rillenstruktur
- 84: Außenseite

## Patentansprüche

1. Vorrichtung (36, 81) zum Verbinden zweier Möbelteile, umfassend ein, an einem ersten Möbelteil (35) anordenbares Gehäuse (13, 51) und ein im Gehäuse (13, 51) drehbar gelagertes Exzenterelement (1, 52), wobei das Gehäuse (13, 51) an einer Wandseite (15, 76) abgeflacht ist, wobei die abgeflachte Wandseite (15, 76) des Gehäuses eine durchgehende Öffnung (25, 59) aufweist, wobei das Exzenterelement (1, 52) dazu ausgebildet ist, mit einem Verbindungselement (8, 58) zusammenzuwirken, wobei das Verbindungselement (8, 58) an einem zweiten Möbelteil (31) anordenbar ist, und wobei das Verbindungselement (8, 58) mit dem Gehäuse (13, 51) und dem Exzenterelement (1, 52) derart gekoppelt werden kann, dass das erste und das zweite Möbelteil (31, 35) fest miteinander verbunden sind, wobei die durchgehende Öffnung (25, 59) des Gehäuses (13, 51) an der abgeflachten Wandseite (15, 76) durch Wandabschnitte (26 - 29, 60 - 63) randseitig vollständig umschlossen ist, **dadurch gekennzeichnet, dass** die abgeflachte Wandseite (15, 76) des Gehäuses (13, 51) auf ihrer Außenseite (23, 56) eine Oberflächenstruktur in Form einer Quer- und/oder Längsriffelung (24, 57) aufweist,
oder dass die abgeflachte Wandseite (15, 76) des Gehäuses (13, 51) auf ihrer Außenseite (23, 56) eine Oberflächenstruktur in Form einer Riffelung aufweist, welche schräg an der Außenseite ausgeführt ist,
oder, dass die abgeflachte Wandseite (15, 76) des Gehäuses (13, 51) auf ihrer Außenseite (23, 56) eine Oberflächenstruktur in Form einer Quer- und/oder Längsriffelung (24, 57) oder eine Riffelung, welche schräg an der Außenseite ausgeführt ist, aufweist und eine zusätzliche um 90° gedrehte Riffelung umfasst,
sodass bei einer Montage eine Höhen- und/oder Längs-Einstellung der beiden zu montierenden Möbelteile zueinander ermöglicht ist.

2. Vorrichtung (36, 81) nach Anspruch 1, **dadurch gekennzeichnet, dass** die Öffnung (25, 59) des Gehäuses (13, 51) derart ausgestaltet ist, dass das Verbindungselement (8, 58), in einer Bewegung senkrecht zur abgeflachten Wandseite (15, 76) in Richtung des Exzenterelements (1, 52) durch die Öffnung (25, 59) hindurchragend in das Gehäuse (13, 51) eingeschoben werden kann.

3. Vorrichtung (36, 81) nach einem der vorangegangenen Ansprüche, **dadurch gekennzeichnet, dass** ein Stützabschnitt (22, 55) der abgeflachten Wandseite (15, 76) als ein bei einer üblichen Montage verformbarer Bereich ausgebildet ist.

4. Vorrichtung (36, 81) nach einem der vorangegangenen Ansprüche, **dadurch gekennzeichnet, dass** an einem stirnseitigen Bereich des Exzenterelements (1, 52) ein Spannelement (5, 71) angeordnet ist, wobei das Exzenterelement (1, 52) mit einer dem Spannelement (5, 71) gegenüberliegenden Seite (3, 83) zuerst in das Gehäuse (13, 51) eingesetzt wird.

5. Vorrichtung (36, 81) nach einem der vorangegangenen Ansprüche, **dadurch gekennzeichnet, dass** eine Rotationsachse des Exzenterelements (1, 52) im eingesetzten Zustand im Gehäuse senkrecht zur abgeflachten Wandseite (15, 76) ausgerichtet ist.

6. Vorrichtung (36, 81) nach einem der vorangegangenen Ansprüche, **dadurch gekennzeichnet, dass** das Exzenterelement (1, 52) hebelartig ausgebildet ist, wobei das Spannelement (5, 71) an einem ersten Ende des Exzenterelements (1, 52) angeordnet ist und wobei das Exzenterelement (1, 52) am zweiten Ende ein Montageelement (4, 83) umfasst.

7. Vorrichtung (36, 81) nach einem der vorangegangenen Ansprüche, **dadurch gekennzeichnet, dass** eine Deckwand (17) des Gehäuses (13, 51) über eine Seitenwand (14) des Gehäuses (13, 51) überstehend angeordnet ist.

8. Vorrichtung (36, 81) nach einem der vorangegangenen Ansprüche, **dadurch gekennzeichnet, dass** das Gehäuse (13, 51) ein Sicherungsorgan (16) aufweist.

9. Vorrichtung (36, 81) nach einem der vorangegangenen Ansprüche, **dadurch gekennzeichnet, dass** an der den Seitenwänden (14, 15, 76) gegenüberliegenden Seite (32) der Deckwand (17) ein Kopplungsmittel (18) angeordnet ist.

10. Beschlag zum Verbinden zweier Möbelteile (31,35) bestehend aus einer Vorrichtung (36,81) nach einem der Ansprüche 1 bis 9 und einem Verbindungselement (8,58), **dadurch gekennzeichnet, dass** das Verbindungselement mehrteilig ausgebildet ist und ein Dübelorgan (10,80) und ein Kopplungsorgan (9,70) umfasst.

11. Beschlag nach Anspruch 10, **dadurch gekennzeichnet, dass** das Verbindungselement ein Justageorgan (50) umfasst, wobei das Justageorgan (50) eine Rillenstruktur aufweist.

12. Schublade (42) mit einem Beschlag nach Anspruch 10 oder 11.

13. Möbel (39) mit einem Beschlag nach Anspruch 10 oder 11 oder mit einer Schublade (42) nach Anspruch 12.

## Claims

1. Device (36, 81) for connecting two furniture parts, comprising a housing (13, 51) which can be arranged on a first furniture part (35) and an eccentric element (1, 52) which is rotatably mounted in the housing (13, 51), wherein the housing (13, 51) is flattened on one wall side (15, 76), wherein the flattened wall side (15, 76) of the housing has a continuous opening (25, 59), wherein the eccentric element (1, 52) is configured to interact with a connecting element (8, 58), wherein the connecting element (8, 58) can be arranged on a second furniture part (31), and wherein the connecting element (8, 58) can be coupled to the housing (13, 51) and the eccentric element (1, 52) in such a way that the first and the second furniture part (31, 35) are firmly connected to one another, wherein the continuous opening (25, 59) of the housing (13, 51) on the flattened wall side (15, 76) is completely enclosed at the edge by wall portions (26 - 29, 60 - 63), **characterized in that** the flattened wall side (15, 76) of the housing (13, 51) has, on its outer side (23, 56), a surface structure in the form of a transverse and/or longitudinal ribbing (24, 57),
or **in that** the flattened wall side (15, 76) of the housing (13, 51) has, on its outer side (23, 56), a surface structure in the form of a ribbing which is embodied obliquely on the outer side,
or **in that** the flattened wall side (15, 76) of the housing (13, 51) has, on its outer side (23, 56), a surface structure in the form of a transverse and/or longitudinal ribbing (24, 57) or a ribbing which is embodied obliquely on the outer side, and comprises an additional ribbing rotated through 90°,
such that a height and/or longitudinal adjustment of the two furniture parts to be assembled relative to one another is made possible during assembly.

2. Device (36, 81) according to Claim 1, **characterized in that** the opening (25, 59) of the housing (13, 51) is designed in such a way that the connecting element (8, 58) can be slid, in a movement perpendicular to the flattened wall side (15, 76) in the direction of the eccentric element (1, 52), into the housing (13, 51) so as to project through the opening (25, 59).

3. Device (36, 81) according to either of the preceding claims, **characterized in that** a support portion (22, 55) of the flattened wall side (15, 76) is configured in the form of a region that can be deformed during standard assembly.

4. Device (36, 81) according to one of the preceding claims, **characterized in that** a clamping element (5, 71) is arranged on an end-side region of the eccentric element (1, 52), wherein the eccentric element (1, 52) is firstly inserted by way of a side (3, 83) lying opposite the clamping element (5, 71) into the housing (13, 51).

5. Device (36, 81) according to one of the preceding claims, **characterized in that** an axis of rotation of the eccentric element (1, 52) in the state when inserted in the housing is oriented perpendicular to the flattened wall side (15, 76).

6. Device (36, 81) according to one of the preceding claims, **characterized in that** the eccentric element (1, 52) is of lever-like configuration, wherein the clamping element (5, 71) is arranged at a first end of the eccentric element (1, 52) and wherein the eccentric element (1, 52) comprises an assembly element (4, 83) at the second end.

7. Device (36, 81) according to one of the preceding claims, **characterized in that** a top wall (17) of the housing (13, 51) is arranged so as to protrude beyond a side wall (14) of the housing (13, 51).

8. Device (36, 81) according to one of the preceding claims, **characterized in that** the housing (13, 51) has a securing member (16).

9. Device (36, 81) according to one of the preceding claims, **characterized in that** a coupling means (18) is arranged on that side (32) of the top wall (17) which lies opposite the side walls (14, 15, 76).

10. Fitting for connecting two furniture parts (31, 35), consisting of a device (36, 81) according to one of Claims 1 to 9 and a connecting element (8, 58), **characterized in that** the connecting element is of multi-part configuration and comprises a dowel member (10, 80) and a coupling member (9, 70).

11. Fitting according to Claim 10, **characterized in that** the connecting element comprises an adjustment member (50), wherein the adjustment member (50) has a grooved structure.

12. Drawer (42) with a fitting according to Claim 10 or 11.

13. Item of furniture (39) with a fitting according to Claim 10 or 11 or with a drawer (42) according to Claim 12.

## Revendications

1. Dispositif (36, 81) de liaison de deux parties de meuble, comportant un boîtier (13, 51) pouvant être disposé sur une première partie de meuble (35) et un élément excentrique (1, 52) monté rotatif dans le boîtier (13, 51), le boîtier (13, 51) étant aplati au niveau d'un côté de paroi (15, 76), le côté de paroi aplati (15, 76) du boîtier comprenant une ouverture traversante (25, 59), l'élément excentrique (1, 52) étant réalisé pour coopérer avec un élément de liaison (8, 58), l'élément de liaison (8, 58) pouvant être disposé sur une deuxième partie de meuble (31), et l'élément de liaison (8, 58) pouvant être accouplé au boîtier (13, 51) et à l'élément excentrique (1, 52) de telle sorte que la première et la deuxième partie de meuble (31, 35) soient reliées solidement l'une à l'autre, l'ouverture traversante (25, 59) du boîtier (13, 51) étant, au niveau du côté de paroi aplati (15, 76), entourée complètement du côté de son bord par des parties de paroi (26 - 29, 60 - 63), **caractérisé en ce que** le côté de paroi aplati (15, 76) du boîtier (13, 51) comprend sur son côté extérieur (23, 56) une structure de surface sous la forme d'un striage transversal et/ou longitudinal (24, 57),
ou **en ce que** le côté de paroi aplati (15, 76) du boîtier (13, 51) comprend sur son côté extérieur (23, 56) une structure de surface sous la forme d'un striage, lequel est réalisé de manière oblique sur le côté extérieur, ou **en ce que** le côté de paroi aplati (15, 76) du boîtier (13, 51) comprend sur son côté extérieur (23, 56) une structure de surface sous la forme d'un striage transversal et/ou longitudinal (24, 57) ou un striage, lequel est réalisé de manière oblique sur le côté extérieur, et comporte un striage supplémentaire tourné de 90°,
de sorte que, lors d'un montage, un réglage en hauteur et/ou en longueur des deux parties de meuble à monter l'une par rapport à l'autre soit rendu possible.

2. Dispositif (36, 81) selon la revendication 1, **caractérisé en ce que** l'ouverture (25, 59) du boîtier (13, 51) est configurée de telle sorte que l'élément de liaison (8, 58) peut être introduit dans le boîtier (13, 51) dans un mouvement perpendiculaire au côté de paroi aplati (15, 76) en direction de l'élément excentrique (1, 52) de manière à traverser l'ouverture (25, 59).

3. Dispositif (36, 81) selon l'une des revendications précédentes, **caractérisé en ce qu'**une partie de support (22, 55) du côté de paroi aplati (15, 76) est réalisée sous la forme d'une région déformable lors d'un montage usuel.

4. Dispositif (36, 81) selon l'une des revendications précédentes, **caractérisé en ce qu'**un élément de serrage (5, 71) est disposé sur une région frontale de l'élément excentrique (1, 52), l'élément excentrique (1, 52) étant inséré tout d'abord dans le boîtier (13, 51) par un côté (3, 83) opposé à l'élément de serrage (5, 71).

5. Dispositif (36, 81) selon l'une des revendications précédentes, **caractérisé en ce qu'**un axe de rotation de l'élément excentrique (1, 52), dans l'état inséré dans le boîtier, est orienté perpendiculairement au côté de paroi aplati (15, 76).

6. Dispositif (36, 81) selon l'une des revendications précédentes, **caractérisé en ce que** l'élément excentrique (1, 52) est réalisé en forme de levier, l'élément de serrage (5, 71) étant disposé à une première extrémité de l'élément excentrique (1, 52) et l'élément excentrique (1, 52) comportant un élément de montage (4, 83) à la deuxième extrémité.

7. Dispositif (36, 81) selon l'une des revendications précédentes, **caractérisé en ce qu'**une paroi supérieure (17) du boîtier (13, 51) est disposée de manière à dépasser d'une paroi latérale (14) du boîtier (13, 51).

8. Dispositif (36, 81) selon l'une des revendications précédentes, **caractérisé en ce que** le boîtier (13, 51) comprend un organe de blocage (16).

9. Dispositif (36, 81) selon l'une des revendications précédentes, **caractérisé en ce qu'**un moyen d'accouplement (18) est disposé sur le côté (32) de la paroi supérieure (17) opposé aux parois latérales (14, 15, 76).

10. Ferrure servant à la liaison de deux parties de meuble (31, 35), constituée d'un dispositif (36, 81) selon l'une des revendications 1 à 9 et d'un élément de liaison (8, 58), **caractérisée en ce que** l'élément de liaison est réalisé en plusieurs parties et comporte un organe formant cheville (10, 80) et un organe d'accouplement (9, 70).

11. Ferrure selon la revendication 10, **caractérisée en ce que** l'élément de liaison comporte un organe d'ajustement (50), l'organe d'ajustement (50) comprenant une structure rainurée.

12. Tiroir (42) comportant une ferrure selon la revendication 10 ou 11.

13. Meuble (39) comportant une ferrure selon la revendication 10 ou 11 ou comportant un tiroir (42) selon la revendication 12.
